Europäisches Patentamt

European Patent Office

Office européen des brevets

(19)

(11) Publication number: **0 021 575**

**A1**

(12) **EUROPEAN PATENT APPLICATION**

(21) Application number: **80301514.8**

(22) Date of filing: **08.05.80**

(51) Int. Cl.³: **B 01 F 3/04**
**B 05 B 1/28**
**//G01N1/00**

(30) Priority: **16.05.79 GB 7916953**
**08.11.79 GB 7938803**

(43) Date of publication of application:
**07.01.81 Bulletin 81/1**

(84) Designated Contracting States:
**DE FR GB IT NL**

(71) Applicant: IMPERIAL CHEMICAL INDUSTRIES LIMITED
Imperial Chemical House Millbank
London SW1P 3JF(GB)

(72) Inventor: Whitby, Francis John
29 Heath Rise
Brixham Devon(GB)

(72) Inventor: Lau, Daniel Chee-Wai
Flat F, 22nd Floor Chai Kung Mansions T-25
Kamdin Terrace Taikoo Shing Hong Kong(HK)

(72) Inventor: Bishop, Edmund
10 Marlborough Road
Exeter Devon(GB)

(74) Representative: Bate, Bernard James et al,
Imperial Chemical Industries Limited Legal Department:
Patents Thames House North Millbank
London SW1P 4QG(GB)

(54) Method, apparatus and use for nebulisation of liquids.

(57) Production of aerosols or vapour by nebulisation of a liquid, in which any liquid passing through the nebuliser without being nebulised is mixed with the liquid feed to the nebuliser so that the rate at which liquid is fed to the nebuliser is in balance with the rate of actual nebulisation of the liquid.

Fig.1.

EP 0 021 575 A1

1

## Method, Apparatus and Use for Nebulisation of Liquids

This invention relates to methods for the production of aerosols or vapours by nebulisation and to apparatus suitable for use in such methods.

For convenience the invention will be described with particular reference to the measurement of total dissolved and colloidal organic carbon in waste water but, as will become apparent, the method and apparatus have much wider applicability.

Charges are made by local authorities for acceptance of waste water into local sewers for subsequent biological and physical treatment on a basis in which an important parameter is the chemical oxygen demand (COD) of the waste water. The financial significance of such charges tends to increase as costs and environmental pressures increase. Since the chemical oxygen demand of waste water is likely to be a time-variable parameter, there is an interest in obtaining continuous or nearly continuous measurements of it.

While flow colourimetric methods have been developed for semi-continuous automatic measurement of chemical oxygen demand, they suffer from the disadvantages of being complex and hazardous and in that a significant time is required to obtain a result. For these reasons, the related parameters total oxygen demand (TOD) and total organic carbon (TOC), which may be measured instrumentally, have been suggested for monitoring variations in the load of pollutants in waste water. These parameters are not related to chemical oxygen demand by a fixed relationship but can be calibrated in terms of COD for particular waste waters in accordance with the nature of the pollutants.

Of the currently available commercial instruments for these purposes, those measuring total oxygen demand appear to behave reliably in service, but this method suffers the disadvantage of being influenced by the presence of ammonia, nitrite, nitrate and sulphate ions, a disadvantage that does not apply to the measurement of total organic carbon.

Weaknesses in available instruments for the measurement of total organic carbon arise from the friable nature of the oxidation catalyst used, the complexity of the overall chemistry and from faults in the sample inlet system when this is arranged for continuous sample feed. Furthermore these instruments are very expensive.

According to one aspect of this invention therefore, there is provided a relatively simple method and apparatus for the measurement of total organic carbon in water, particularly waste water, which avoids the use of catalysts, and which is simple both chemically and from the instrumental point of view.

British Specification No 1,475,432 describes a method and apparatus for analysing the organic content of the effluent from a liquid chromatograph in which the effluent is passed through an atomiser (a vibrating capillary atomiser is shown) and together with a carrier gas the cloud of particles produced is passed through a solvent-stripping column and then to a detector, which can be a flame ionisation detector (FID) amongst many other possibilities. We have attempted to use an apparatus of this general type for the continuous measurement of total organic carbon in the form of dissolved or colloidally dispersed organic compounds in water, particularly waste water, by attempting to nebulise the water (that is reducing it to an aerosol mist) or vapourise it completely and then pass the mist or gas produced through a flame ionisation detector, the aerosol mist having droplets of 30 μm diameter or less. For the purpose of this description we use the term "nebulisation" to include both the reduction of liquid to an aerosol (i.e. small droplets of liquid in gas) or to a vapour. We have found that with a wide range of devices, it was not possible to achieve complete nebulisation with the result that some water was always left unconverted, and when the method was applied to water containing volatile organic compounds, selective vapourisation took place; thereby rendering the calibration of the instrument markedly different for a variety of different organic compounds. For instance, trials were made with atomising air jet nebulisers of high efficiency designed to avoid drip at the atomising jet, and also using a sonic nebuliser to produce droplets successively at the end of a fine capillary and then to evaporate them in an air stream to obtain droplets of 25 μm diameter, and with ultra-sonic nebulisers to produce droplets directly from an aqueous stream and with electrostatic nebulisers. The art on methods of producing an aerosol mist is in fact extremely extensive, for instance in connection with instruments such as atomic absorption spectrophotometers, the spraying of paint, pesticides and coatings, and the use of any system capable of producing an aqueous aerosol mist was contemplated and a variety of methods was tried. It was hoped to avoid incomplete nebulisation to particles in the range 25 μm or less, but we were unable to do this using commercially available apparatus. Ultimately we discovered that if partial nebulisation is tolerated and the un-nebulised liquid is collected and recycled, preferably so that the quantity of such recycled liquid in the instrument at any one time is kept to a minimum, and so that the rate of fresh liquid fed to the instrument is substantially equal to the rate of nebulisation, stable measurement is possible and differences in calibration due to selective vapourisation are largely compensated for.   It is, of course, desirable also to avoid condensation on the walls of the apparatus which are arranged to minimise this, for instance by heating them and/or by avoiding the use of narrow tubing.

Thus, in its broadest concept the present invention provides a method of producing aerosols or vapours by nebulisation of a liquid in which the liquid is nebulised and any liquid passing through the nebuliser without being nebulised is mixed with liquid being fed to the nebuliser in such a way that the rate of liquid fed to the nebuliser is in balance with the rate of actual nebulisation of the liquid.

The liquid to be nebulised may be a pure liquid or it may be a solution or suspension of other materials, which may be inorganic or organic in nature, in the liquid.  The method is applicable to a wide range of uses in which nebulisation is involved and particularly where constancy of the composition of aerosol or vapour from nebulisation is important.  Examples include spraying of crop treatment materials, e.g. insecticides and paint-spraying.

Another area in which constancy of composition of aerosol or vapour is often important is in analysis and in this connection the invention provides a method for the measurement of the concentration of a material dissolved or dispersed in a liquid solvent or vehicle, in which a sample of the liquid (including the solute or suspended material) is nebulised and contacted with a suitable means of analysis for the material, wherein any liquid passing through the nebuliser without being nebulised is recycled and mixed with the incoming sample of liquids in such a way that the rate of sample liquid feed is in balance with the actual rate of nebulisation of the liquid.

Materials which may be measured in this way include a wide range of inorganic and organic materials, which are capable of being dissolved or suspended in a suitable liquid, the liquid and dissolved or suspended material then being capable of being nebulised. Examples of materials which may be nebulised include organometallics, e.g. lead tetraethyl and dimethyl mercury, total organic carbon, organic phosphates, mercaptans, etc.

Suitable liquids for use include solvents or vehicles capable of suspending the materials in a form suitable for nebulisation, for example, at a suitable viscosity, in a form which is physically compatible, e.g. will not block the nebuliser or other parts of the equipment employed and will not react adversely or undesirably with the materials or any other substance with which it comes into contact in the course of execution of the invention. Examples are organic solvents, e.g. acetone, alcohols, lower hydrocarbons, e.g. hexane, water, dilute acids and other aqueous liquids.

The means of analysis may be any convenient and suitable device, for example including devices comprising a detector and associated analysing equipment. As examples of means of analysis we may mention flame ionisation, electron capture, flame emission and flame thermionic detectors, spectrometers, including plasma spectrometers, katharometers and other suitable devices.

The method is particularly suitable for the continuous measurement of material in a liquid solvent or vehicle therefore.

Specifically, the invention provides a method for the continuous or semi-continuous measurement of total organic carbon in the form of dissolved or colloidally dispersed carbon compounds in water, for convenience this will be referred to as "water", in which the water is nebulised and the gas or mist produced is passed through a flame ionisation detector, wherein any water passing through the nebuliser without being nebulised

6

is recycled and mixed with the incoming sample of water in such a way that the rate of sample water fed to the nebuliser is substantially equal to the actual rate of nebulisation.

It will be understood, of course, that where reference is made herein to liquid which is a suspension, nebulisation will usually result in an aerosol of small particles of the suspended material in association with small droplets or vapour of the liquid vehicle.

The invention provides apparatus for the production of an aerosol or vapour of a liquid comprising a nebuliser adapted to be fed with the liquid to be nebulised and, associated therewith, means for collecting liquid which has passed through the nebuliser without being nebulised, mixing the collected liquid with incoming liquid and passing the so-formed mixture to the nebuliser.

The invention also provides apparatus for the measurement of a material dissolved or dispersed in a liquid solvent or dispersant therefor, comprising a nebuliser adapted to be fed with a liquid and, associated therewith, means for collecting liquid which has passed through the nebuliser without being nebulised, mixing the collected liquid with an incoming sample of liquid and passing the so-formed mixture to the nebuliser, the combination of the nebuliser and the associated means being arranged so that liquid passing through the nebuliser without being nebulised is mixed with fresh sample and recycled in such a way that the rate at which the sample is fed to the nebuliser is substantially equal to the actual rate of nebulisation, whereby the overall effect is to nebulise the sample completely.

It is important that condensation of the nebulised vapour upon the walls of the apparatus is avoided and one way in which this may be accomplished is by providing means for heating the walls of the apparatus so that condensation is substantially avoided. Conveniently heating means are provided to heat the exterior of the apparatus to prevent said condensation.

It is advantageous to avoid the use of narrow bore tubing connecting the nebuliser to the detector.

Particularly, the invention provides apparatus for the continuous or semi-continuous measurement of total organic carbon in water, in the form of dissolved or colloidally dispersed organic carbon compounds, comprising a nebuliser adapted to be fed continuously with the water and associated with it means to collect from the nebuliser water that has not been nebulised and to mix it with the incoming sample and pass the so-formed mixture to the nebuliser, the combination of the nebuliser and such means being arranged so that water passing through the nebuliser which is not nebulised is mixed with fresh sample and recycled in such a way that the rate of sample water fed to the apparatus is substantially equal to the true rate of nebulisation, whereby the overall effect is to nebulise the sample water completely, and a flame ionisation detector, preferably connected in such a way to the nebuliser and/or means are provided for heating the exterior of the apparatus so that condensation of the aerosol mist on the interior walls of the apparatus is substantially avoided. Thus the flame ionisation detector should not be connected to the nebuliser by narrow bore tubing (for example of less than 1 mm internal diameter).

An alternative way of reducing or preventing condensation of the nebulised liquid and which may also facilitate the transport of the sample to be analysed to the detector in such a way that inhomogeneities are reduced is to dilute the aerosol with a gas, conveniently by using a gas jet nebuliser.

Preferably only a proportion of the vapour/gas mixture reaches the detector, the remainder may be discarded or otherwise disposed of. Thus, usually only a fraction,

e.g. $^1/10$ or less of the mist, will reach the detector. Thus the apparatus conveniently comprises a nebuliser producing 100 or even 500 times more aerosol mist than is led to the detector and also comprises means for dividing the stream of aerosol mist produced by the nebuliser to that end. The gas used in the gas jet nebuliser can conveniently for many applications be air, as indicated in the example below, it may be desired to reduce interference in the detector caused by the presence of metal atoms or ions from the sample, and in such a case it is useful to use a quenching gas such as argon or nitrogen.

The invention is now described with reference to the accompanying drawings in which:

Figure 1 shows diagrammatically the layout of the whole instrument.

Figure 2 shows diagrammatically the sample feed and recycle system.

Figure 3 shows the circuit diagram of a low pass active filter used to smooth out the response of the instrument.

Figure 4 shows in detail the preferred form of recycle system associated with the nebuliser.

Figure 5 shows a typical response/time plot obtained from the recorder 22 of the instrument.

Figure 6 plots carbon concentration against response, indicating the degree of linearity of the instrument response.

Figure 7 shows recorder response to repeated change of ethanol concentration; and

Figure 8 shows the relative response of the instrument at various fresh sample feed rates with both a volatile and an involatile solute from which, by plotting the ratio of these, a relative response curve is derived and used to optimise the fresh sample feed rate.

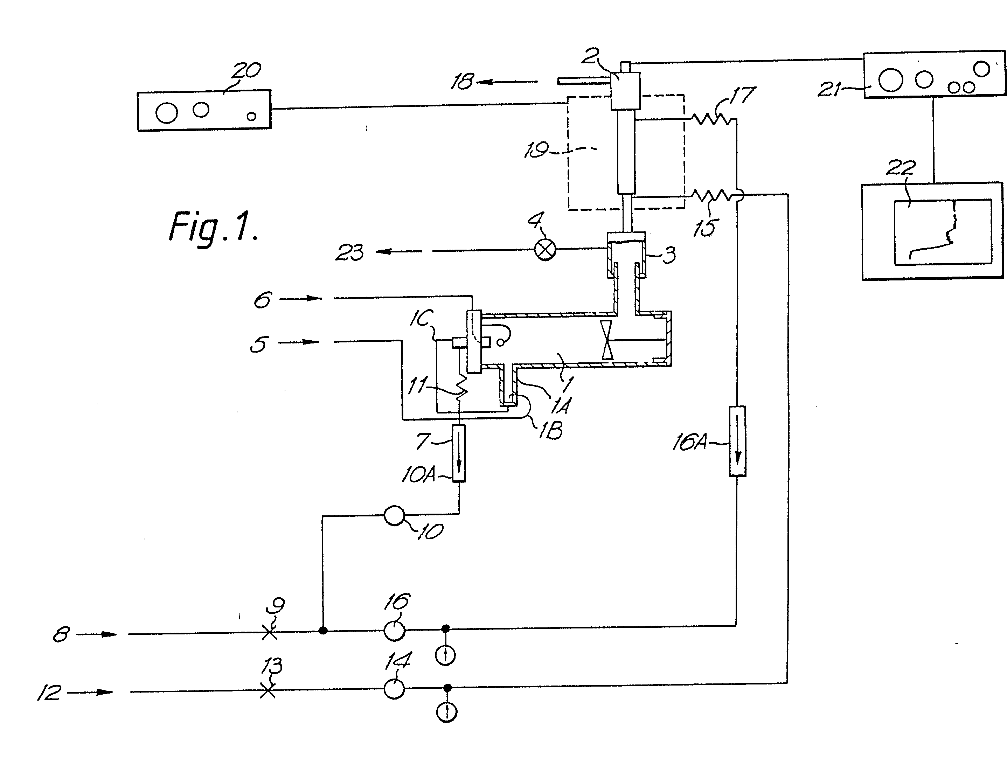

The invention is now described with reference to Figure 1 of the accompanying drawings in which a nebuliser 1 is connected to a flame ionisation detector 2 through a flow splitter 3 having a needle valve control 4. The sample is introduced from a side-stream or fast loop sampling system at 5 and is nebulised by means of gas (air) streams 6 and 7, gas (air) stream 7 being supplied from a gas (air) supply 8 through toggle valve 9, flow controller 10, flow gauge 10A and flow restrictor 11.

The nebuliser 1 has a stationary vane mixer to improve homogeneity of the aerosol mist produced and a drain 1A to drain off any water that is not nebulised together with any liquid formed by condensation of the mist on the walls of the nebuliser 1 and flow splitter 3 (which is preferably reduced by lagging these parts of the apparatus and/or wrapping them with electric heating tape). Fresh sample water is fed to the bottom of the drain at 1B from line 5 and on mixing with drain water is fed with recycled drain water by line 1C to the nebuliser sample input.

The flame ionisation detector 2 is connected by wide bore tubing or directly to the flow splitter 3 so that it is fed by the latter with aerosol mist. It is also supplied with hydrogen from source 12 (via toggle valve 13, flow controller 14 and flow restrictor 15) and by air from air source 8 (via toggle valve 9, flow controller 16, flow gauge 16A and flow restrictor 17). The off gas from the flame ionisation detector is removed at outlet pipe 18. The flame ionisation detector is surrounded by an oven 19, controlled by oven controller 20. Alternatively (particularly when directly connected to the flow splitter) it is heated by an electric heating tape. The electrical output from the flame ionisation detector is amplified by amplifier 21 whose output drives recorder 22.

In operation, continuous samples of waste water e.g. from a fast loop sampler at 5 are led to the bottom of the nebuliser drain at 1A where the head of liquid is maintained at the lowest possible level so that the "dead space" comprised by the bottom of the drain, the recycle line 1C and water passages in the nebuliser are kept to a minimum, say less than 0.50 to 1.0 ml. In this way the time required for the nebuliser/recycle system to reach equilibrium is minimised. Gas streams 6 and 7 are also provided in order to produce a large volume of aerosol mist, most of which is discarded at 23 through flow splitter needle valve 4. In practice about 1/500 part of the aerosol mist is fed to the flame ionisation detector with the needle valve control 4 almost fully open. To prevent condensation in the flame ionisation detector

0021575

the oven (or equivalent electric heating tape) is maintained at 150°C and the gas flows are chosen to ensure that explosive gas mixtures are not formed other than in the flame ionisation detector itself.

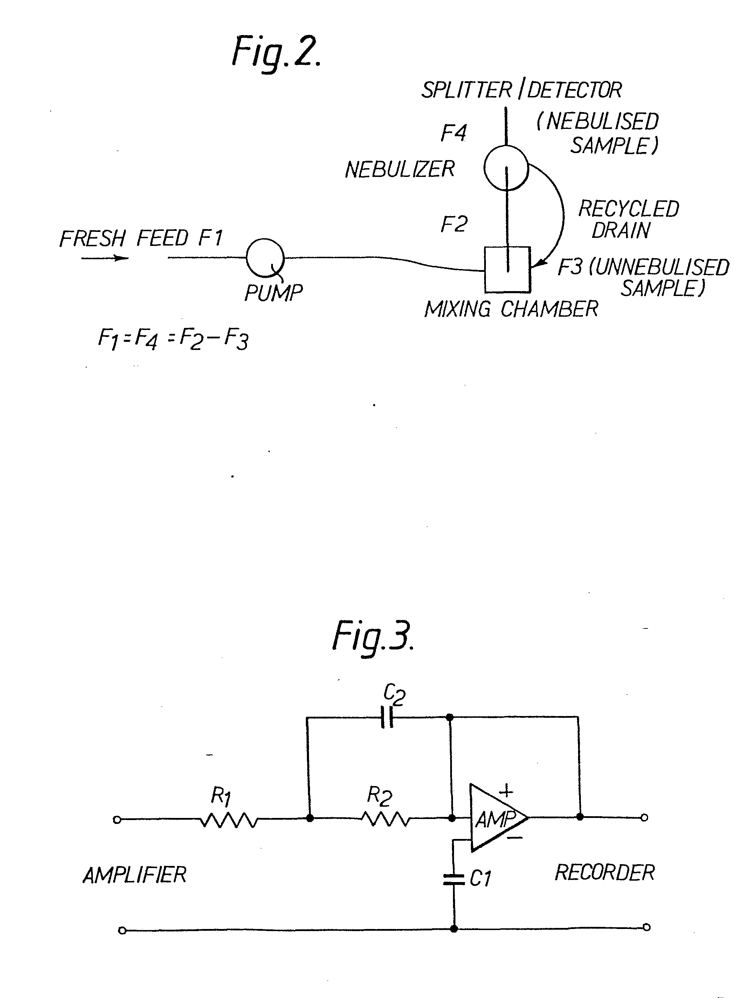

Figure 2 illustrates the recycle system, which involves continuously collecting the drain liquid from the nebuliser chamber and combining this with fresh sample at a rate which makes up for the loss of that portion of the sample which has been successfully nebulised and passed to the splitter 3 and detector 2. The combined sample is then re-fed to the nebuliser on a continuous basis such that $F_1 = F_4 = F_2 - F_3$ where $F_1$ is the sample feed rate, $F_4$ is the rate of successful nebulisation, $F_2$ is the total feed rate to the nebuliser and $F_3$ is the rate of recycle.

The principle of the recycle-system relies on the assumption that for samples containing volatile organics, most of these volatile organics will be stripped off into the vapour phase during sample nebulization. The liquid which is collected by the drain will thus be denuded of these volatile organics. When the collected drain liquid is combined with a fresh sample feed the concentration of the volatile organics in the combined liquid will be much lower than that in the fresh sample. For samples containing non-volatile organics, such as benzoic acid, the aerosol droplets which are passed forward to the splitter and detector will have the same composition as that of the liquid portion collected in the drain. When such a sample drain is combined with a fresh sample feed, as already described, the concentration of the organics in the combined sample will be the same as that in the fresh sample feed. Provided that the rate of fresh sample feed matches the rate of liquid sample loss due to sample nebulization, the dilution effect arising from the sample-recycle and the stripping effect due to sample nebulization will cancel out. The fresh sample fed to the recycle-system will eventually be nebulized and passed to the splitter and detector, even though it may go through a few dilution cycles. Such a system can be regarded as an indirect total sample nebulization system. Under these conditions, the relative response of the TOC instrument to organic compounds is primarily related to the dissolved and/or colloidal organic carbon concentration of the sample and is relatively independent of their chemical structure or of their relative volatility from aqueous solution.

Figure 3 shows the circuit diagram of a Sallen-Key low pass active filter which is useful in reducing the "noise" of the instrument. This "noise" is more significant than when using a nebuliser without re-cycle, and is probably caused by small fluctuations in pressure in the nebuliser chamber and also by the need to work at lower signal attenuation. An active low pass filter, with a cut-off characteristic of 0.2 Hz as shown in the diagram is inserted between the amplifier signal output and the recorder. Using this filter, spiky signals are suppressed and a relatively noise reduced output signal is obtained. The values of the components indicated in Figure 3 and the cut-off frequency derived from them are as follows:

$$C_1 = 0.1 \mu F$$
$$C_2 = 0.2 \mu F$$
$$R_1 = 5.6 \ M\Omega$$
$$R_2 = 5.6 \ M\Omega$$

$$\text{cut off frequency, } f_o = \frac{1}{2\pi \sqrt{C_1 C_2 R_1 R_2}}$$

$$\text{if} \quad R_1 = R_2 \quad \text{and} \quad C_2 = 2C_1$$

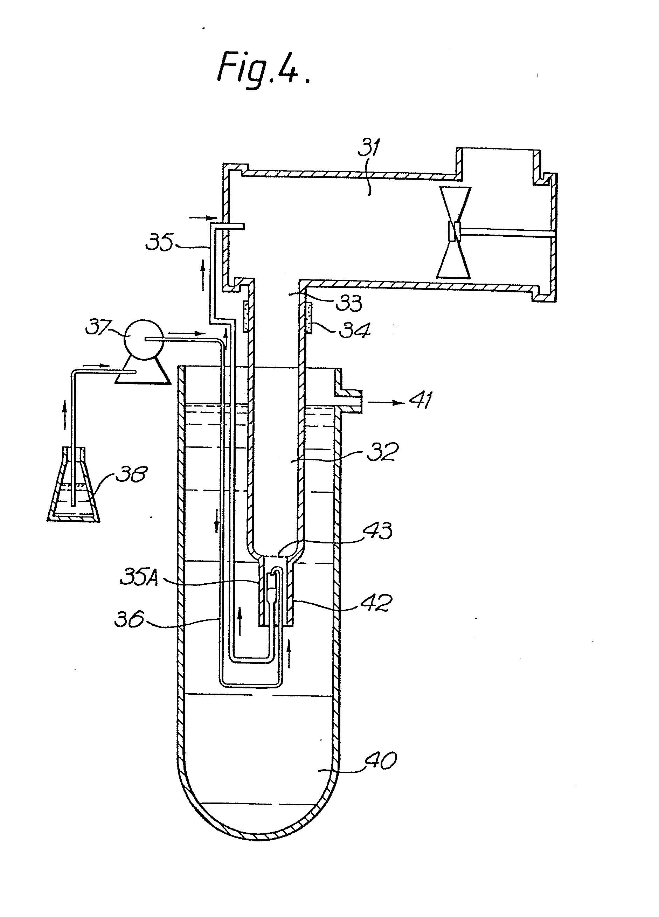

Figure 4 shows the preferred form of recycle-system. The nebuliser 31 has a length of glass tubing 32 (10 x 300mm) joined to the nebuliser drain 33 by a short piece of polypropylene tubing 34. The diameter of the glass tube is reduced at the lower end to minimise the dead volume of the recycle system. The nebuliser sample intake tube 35 comprises a length of stainless steel tube of 0.79mm internal diameter which is enlarged where it snugly fits into the reduced diameter section of the glass tube 32 by being silver soldered to a short length 35A of wider stainless steel tube. Fresh sample is fed to the wider section 35A of stainless steel tube by a narrow bore polytetrafluorethylene tube 36 which in turn is fed by a suitable pump 37 from a sample container 38 or from a fast loop sampler system. The tube 32 attached to the nebuliser drain and, the sample feed tube 36 and nebuliser intake tube 35 are surrounded by a water trap 40 comprising a large glass tube (30 x 450mm) with a side arm for overflow 41 which is capable of vertical movement in order to adjust the back pressure in the system. A piece of glass wool 42 is inserted into the narrow end of the drain tube to minimise the diffusion between fresh material in the drain tube and distilled water placed initially in the water trap. Under correct operating conditions the trap is adjusted upwards or downwards so that the liquid level 43 in the drain tube is maintained as shown at the point where the diameter reduces. There should then be no over-flow from the water trap.

## EXAMPLE

Using a Pye Series 104 flame ionisation detector in the apparatus described above, the air (or other gas) flow to the nebuliser was 4.4-4.5 litres/minute and to the detector, (measured with needle valve 4 closed ) was 600 ml/minute. The hydrogen flow to the detector was 75 ml/minute. The sample flow rate at 5 was 5.5 ml/minute.

Without using the recycle 1B, 1C shown in Figure 1, but by supplying the fresh sample water from line 5 directly into the nebuliser at the point indicated by 1C on Figure 1,,and operating the drain 1A solely as a drain by discarding the liquid collected by it, the relative response of this simplified instrument to a number of organic compounds was measured. The results are shown in Table I and indicate the basic response of the instrument (that is, without recycle and without suppression of alkali metal ion interference - which is described below).

### Flame ionisation detector response for different compounds

To obtain the best results and to avoid the need for calibration, the response of the flame ionisation detector to carbon compounds would have to depend primarily on the number of carbon atoms present in pollutants and not on their state of chemical combination. Furthermore the presence of hetero atoms in dissolved organic compounds (e.g. O, S, N, P) and dissolved salts should not greatly alter the observed response. In practice there is some variation and calibration may be needed if measurements are carried out on waste waters containing pollutants containing hetero atoms.,

Table II gives published data on flame ionisation detector (FID) response per mole per carbon atom in various organic compounds. The presence of nitrogen, oxygen, sulphur and halogens usually decreases the response and this effect can usefully be expressed in terms of a "carbon deficiency" for the compound. This is the difference between the calculated molar detector response for the sample based on its carbon content minus the observed molar response, this quantity being divided by the average molar response of a carbon atom. Table III lists such deficiencies for a number of classes of organic compounds. A check on this response was provided by feeding various compounds through a Pye 104 Gas Chromatograph having a standard flame ionisation detector operating under the following conditions:-

Column 1.524 M x 6.35 mm packed with 10% SE - 30 on silanised Diatomite C (100-120 mesh).

| | | |
|---|---|---|
| Carrier flow ($N_2$) | = | 30 ml/minute |
| Hydrogen flow | = | 50 ml/minute |
| Air flow | = | 640 ml/minute |
| Column temperature | = | 120$^{\circ}$C |
| Injection port temperature | = | 200$^{\circ}$C |
| Detector temperature | = | 250$^{\circ}$C |
| Sample size | = | 10 microlitres |

Solutions of a range of organic compounds in water were injected into the gas-liquid chromatograph column under constant conditions, and the area under the emerging peak was measured by a cut-and-weigh procedure. The results are shown in Table IV.

## TABLE I

Relative response for organic compounds using TOC Monitor

| Compound | Carbon conc. /mgl$^{-1}$ | Relative response per unit carbon concentration* |
|---|---|---|
| Ethanol | 150-500 | Assumed 1.00 |
| i-Propanol | 96-376 | 1.47 |
| n-Butanol | 420 | 1.57 |
| sec-Butanol | 418 | 2.17 |
| Ethylene Glycol | 344 | 0.17 |
| Diethylene Glycol | 404 | 0.12 |
| Methyl Ethyl Ketone | 428 | 5.48 |
| Acetic Acid | 416 | 0.32 |
| Valeric Acid | 440 | 0.55 |
| n-Octoic Acid | 485 | 0.49 |
| Succinic Acid | 200-222 | 0.24-0.60 |
| Oxalic Acid | 297 | 0.08 |
| Pyruvic Acid | 560 | 0.12 |
| Benzoic Acid | 705 | 0.18 |
| Toluene | 158-315 | 10.0-10.1 |
| Ethylbenzene | 340 | 8.8 |
| Xylene | 156 | 10.4 |
| Benzene sulphonic acid | 113 | 1.26 |
| Phenol | 390 | 0.38 |
| p-Cresol | 243 | 0.4 |
| Aniline hydrochloride | 241 | 0.55 |
| Sodium acetate | 320 | 9.08 |
| Sodium benzoate | 645 | 3.40 |

\* Normalised to ethanol solution

0021575

TABLE II

Published data on FID response per carbon atom in

organic compounds

| Compound | Peak area per mole per carbon atom |
|---|---|
| n - Pentane | 0.29 |
| n - Heptane | 0.29 |
| n - Decane | 0.29 |
| Benzene | 0.28 |
| Toluene | 0.28 |
| Ethylbenzene | 0.28 |
| 1 Bromopropane | 0.25 |
| 1 Bromopentane | 0.26 |
| 1 Decene | 0.26 |
| Methyl propionate | 0.19 |
| Methyl hexoate | 0.23 |
| Methyl nonoate | 0.26 |
| Chlorobenzene | 0.27 |
| m- Dichlorbenzene | 0.24 |
| 1,2,4 Trichlorbenzene | 0.22 |
| Butanol | 0.23 |
| Octanol | 0.23 |

## TABLE III

Carbon deficiency for organic compounds containing
heteroatoms :          Flame ionization detector (FID)

| Type of compound | Carbon deficiency |
|---|---|
| Paraffins | 0.0 |
| Olefines | 0.0 |
| Aromatics | 0.0 |
| Alkyl halides | 0.5 |
| Primary and secondary amines | 1.0 |
| Alcohols | 1.0 |
| Ethers | 1.0 |
| Tertiary amines | 2.0 |
| Ketones | 1.0 |
| Esters | 1.0-1.5 |

## TABLE IV

FID response per carbon atom for organic compounds in water
(using a Pye 104 Gas Chromatograph)

| Organic compound | Peak area per unit C concn. |
|---|---|
| Ethanol | 1.00 (normalised to 1.00) |
| iso Propanol | 0.93 |
| n-Butanol | 0.89 |
| sec-Butanol | 0.90 |
| iso-Butanol | 0.97 |
| Ethylene Glycol | 0.89 |
| Diethylene Glycol | 0.69 |
| Methyl ethyl Ketone | 0.94 |
| n- Butyric Acid | 0.89 |
| Toluene | 0.98 |
| Ethyl Benzene | 1.24 |
| p-Xylene | 1.11 |
| Phenol | 0.99 |

## Suppression of interference by inorganic salts

Trials on a wide range of organic compounds indicated that volatile compounds gave a higher response than those that are relatively non-volatile in water. This effect can be reduced by employing the recycle system of the invention and by avoidance of condensation. Alkali metal salts in solution showed a very high detector response, due to the presence of alkali metal atoms and ions in the flame ionisation detector (Table V). Other metals with low ionisation potentials show similar interference, e.g. alkaline earth metal ions and iron and copper ions. This effect can be reduced by adding sulphuric acid or ammonium sulphate to the sample, and/or by the use of quench gas (i.e. a gas that suppresses ionisation of metal atoms, or that reduces the flame temperature) such as argon or nitrogen. Using ammonium sulphate or sulphuric acid interference due to 1000 mg$l^{-1}$ sodium chloride can be substantially eliminated, but suppression in this way of interference by potassium chloride is only effective at low concentration levels of potassium chloride when air is used as the diluent gas.

Consistent with this finding the introduction of oxygen gas into the nebuliser itself was found to enhance the interference caused by potassium ions. Interference by potassium ions can be suppressed by adding sulphuric acid or ammonium sulphate to the sample and by using argon or preferably nitrogen instead of air as the nebulising gas, preferably at a flow rate of at least 4 litres per minute of nebulising gas (see Table VI). In this way it was possible to eliminate completely interference from 500 mg$l^{-1}$ sodium chloride even at low organic carbon concentrations such as 50 mg$l^{-1}$ ethanol and similarly to eliminate interference from 100 mg$l^{-1}$ potassium chloride.

In most commercial TOC instruments, inorganic carbonate gives a response equivalent to its carbon content unless first removed by acidification and degassing of the sample (which simultaneously removes volatile organics).

The effect of inorganic carbonate additions (as ammonium carbonate) to ethanol solutions in the new instrument is shown in Table VII and it is seen that it is without effect whether the solution is acidified or not.

The trials reported in Tables V, VII and VIII were carried out in the simplified instrument described above using a similar nebuliser to that shown in Figure 1 but without recycle of the nebuliser drain liquid.

TABLE V

Effect of Inorganic Salts

| Sample | Concentrations mg/l | | Relative response* |
|---|---|---|---|
| | Carbon | Electrolyte | |
| Ethanol | 2160 | 0 | 1.0 |
| "  +$(NH_4)_2HPO_4$ | " | 2000 | 1.5 |
| "  +$CaSO_4$ | " | 2000 | 1.16 |
| "  +$Ca(NO_3)_2$ | " | 2000 | 2.56 |
| "  +$(NH_4)_2SO_4$ | 835 | 2000 | 1.03 |
| "  +$(NH_4)_2HPO_4$ | " | 2000 | 1.2 |
| "  +$Na_2SO_4$ | " | 2000 | 1.54 |
| "  +$Na_2HPO_4$ | " | 2000 | 18.75 |
| "  +$ZnSO_4$ | " | 1000 | 1.05 |
| "  +$CuSO_4$ | " | 2000 | 1.90 |
| "  +$FeSO_4$ | " | 1000 | 1.13 |
| "  +$CoCl_2$ | " | 1000 | 1.06 |
| "  +$MgSO_4$ | " | 1000 | 1.06 |
| "  +$NH_4Cl$ | 845 | " | 1.0 |
| "  +NaCl | " | " | 5.0 |
| "  +KCl | " | " | 58.9 |
| "  +$BaCl_2$ | " | " | 31.4 |
| Ethanol | 3240 | - | 1.0 |
| "  +NaCl | " | 80 | 1.05 |
| "  +NaCl | " | 800 | 1.66 |
| "  +NaCl | " | 8000 | 6.33 |
| | | | Actual response |
| NaCl | - | 80 | 427 |
| " | - | 800 | 2210 |
| " | - | 8000 | 18090 |
| - | - | - | - |
| Ethanol | 3240 | - | 129 |

* Response is measured by plateau height and is compared with the peak
for ethanol alone as unity.

19

0021575

### TABLE VI

Suppression of the Effect of Alkali Metal Salts

Experimental Conditions:-

| | | |
|---|---|---|
| Hydrogen flow rate | = | 50ml/min |
| Detector air flow rate | = | 600 ml/min |
| Detector oven temperature | = | $110^{o}C$ |
| Split ratio | = | 500 : 1 |
| Ethanol conc. in all cases | = | 500 mg C/l in water |

| Sample | Gas Flow rate to nebulizer: 4 l/min | | |
|---|---|---|---|
| | Air | Argon | Nitrogen |
| Ethanol | 163* | 187 | 146 |
| Ethanol + 1000 mg/l $H_2SO_4$ | 153 | 187 | 146. |
| Ethanol + 1000 mg/l $H_2SO_4$ + 500 mg/l NaCl | 165 | 190 | 146 |
| Ethanol + 1000 mg/l $H_2SO_4$ + 100 mg/l KCl | 258 | 210 | 153 |

* All figures are plateau heights above baseline at a common attenuator setting $(20 \times 10^2)$.

0021575

## TABLE VII

Effect of total dissolved Inorganic Carbon  (T.I.C.)

| Sample | Concentration mgC/l | | Response mms |
|---|---|---|---|
| | TOC | TIC | |
| Ethanol | 423 | 0 | 127 |
| Ethanol + $(NH_4)_2 CO_3$ | " | 50 | 127 |
| " | " | 100 | 127 |
| " | " | 250 | 127 |
| " | " | 500 | 128 |
| " | " | 1000 | 129 |
| " | " | 5000 | 131 |

Operation of the recycle system of the invention

The successful operation of the recycle-system relies largely on the ability to match the rate of fresh sample feed to that rate of sample loss due to successful nebulisation. The rate of fresh sample feed can be accurately controlled by the use of a reliable pumping system. It is, however, difficult to measure directly the rate at which sample is successfully nebulised and passed forward to the splitter and detector. This quantity, $(N)$, however, can be obtained by measuring the difference between the nebuliser sample uptake rate $(S)$, and the rate of liquid sample collection by the drain, $(D)$, (i.e. $N = S - D$). The nebulisation efficiency, defined as $N/S$ x 100%, under the conditions used for the recycle-system, has been determined by feeding distilled water to the nebulizer continuously, and is shown as follows:-

| | | |
|---|---|---|
| Nebulization air flow | : | $2.9 \, lmin^{-1}$ |
| Detector air flow | : | $1 \; lmin^{-1}$ |
| Detector hydrogen flow | : | $60 \, ml \, min^{-1}$ (18 psi) |
| Sample uptake | : | 134 ml |
| Sample drain collected | : | 127 ml |
| Time of running | : | 44 mins. |
| ∴ Sample uptake rate | : | $3.05 \, ml \, min^{-1}$ |
| Rate of sample loss as aerosol due to successful nebulization | : | $\bar{0}.159 \, ml \, min^{-1}$ |
| Efficiency of nebulization | : | 5.2% |

Performance characteristics of the TOC monitoring instrument

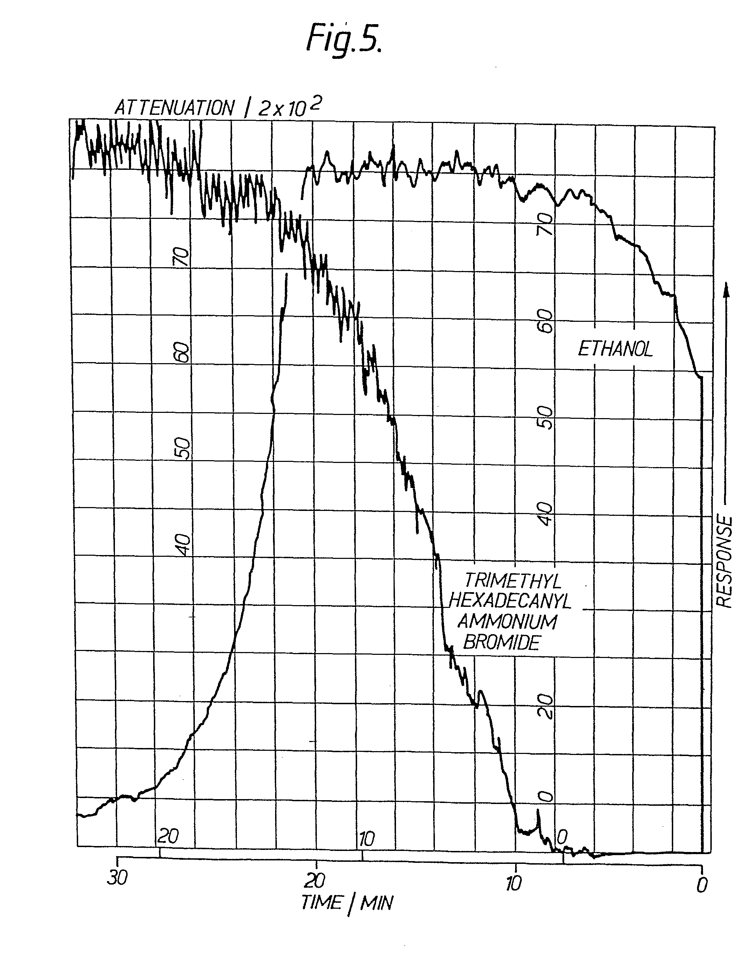

To avoid interference due to dissolved inorganic salts (as described above) all the aqueous solutions tested contained 2,000 $mgl^{-1}$ of sulfuric acid. The monitor response pattern is very similar to that in which a similar nebuliser was used without recycle except that the response time in reaching a steady (plateau) response is slightly longer (5-10 minutes). This is due to the time required (about 2 minutes) to deliver the fresh sample feed to the nebulizer intake, and the time required for the recycle-system to reach a steady concentration in the recycle chamber. Typical response patterns are shown on Figure 5. The Relative Response of the instrument has been tested with various organic compounds and the results, being normalised to ethanol solutions, are summarised in Table VIII.

### TABLE VIII

Relative response of the TOC monitor to organic compounds

Nebulizer uptake rate : 3 ml min$^{-1}$

Fresh sample feed rate : 0.2 ml min$^{-1}$

Dissolved carbon concentration tested : 300 mgl$^{-1}$

| Compound | Plateau height/ mm$^{+}$ | Relative Response* | | |
|---|---|---|---|---|
| | | Experimental | Theoretical | |
| | | | (A)** | (B)*** |
| Ethanol | 131 (20) | 1.0 | 1.0 | 1.0 |
| Aniline | 120 (25) | 0.92 | 1.11 | 1.7 |
| Phenol | 92 (22) | 0.70 | 1.23 | 1.7 |
| 1,2-Ethanediol | 34 (30) | 0.26 | 0.67 | 0.0 |
| Ethanol | 145 (25) | 1.0 | 1.0 | 1.0 |
| Benzoic acid | 80 (30) | 0.55 | 1.13 | 1.12 |
| Ethanol | 164 (30) | 1.0 | 1.0 | 1.0 |
| 1,5-Pentanediol | 167 (30) | 1.02 | 1.07 | 1.2 |
| Trimethyl hexadecanyl ammonium bromide | 205 (30) | 1.25 | 1.19 | 1.8 |

$^{+}$ Measurements based on the instrument response taken at the time/min specified in brackets.

* Responses are normalised with respect to ethanol solution.

** A "carbon deficiency" of 0.5 is assigned to the presence of a hydroxyl group.

*** A "carbon deficiency" of 1.0 is assigned to the presence of a hydroxyl group.

The results indicate that the relative response compared with theory of the monitor has been greatly improved by using the recycle-system. The small deviation from the theoretical values may have been due to the dead volume associated with the recycle-system as described and may also be due to a small loss (deposition) of non-volatile organics in the nebulizer chamber and in the connections to the detector.

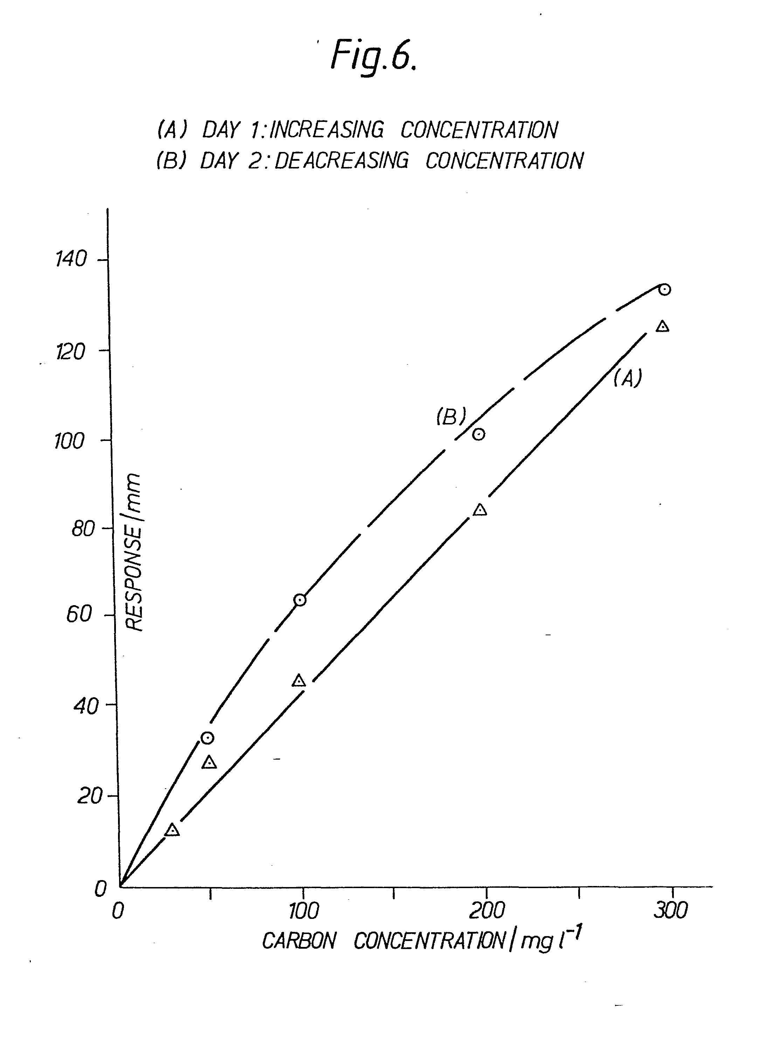

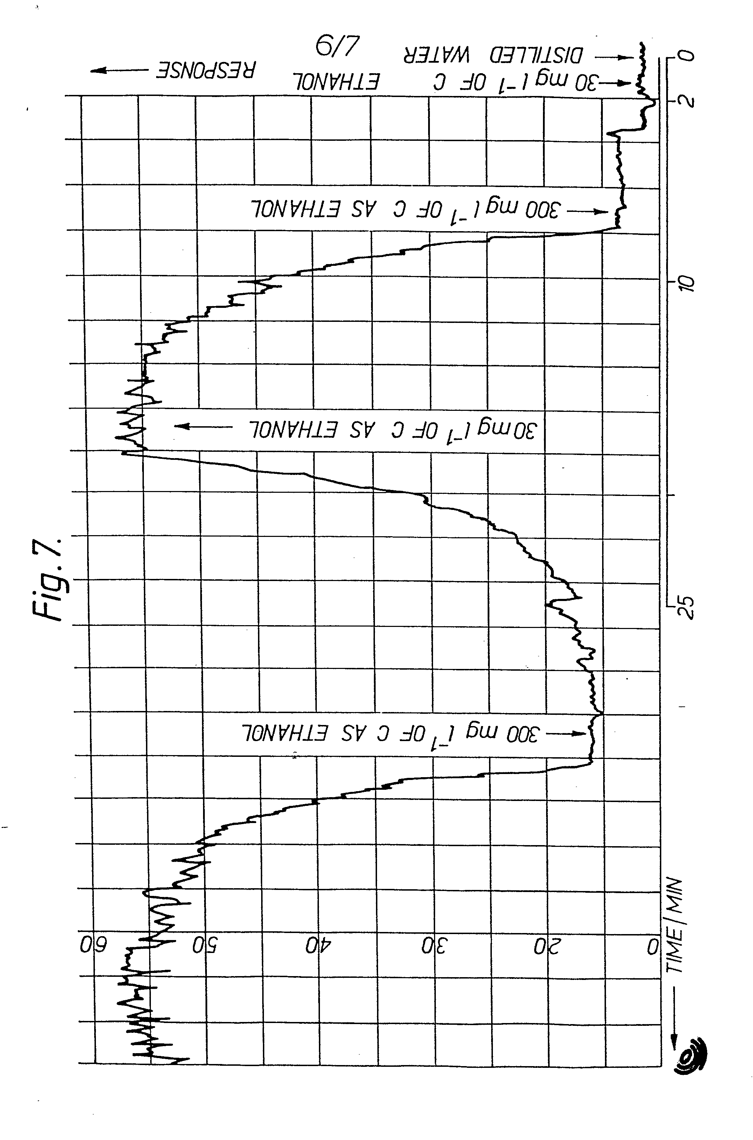

The linearity of the instrument response was further tested with aqueous solution of ethanol at various concentrations. Measurements are based on the instrument response taken at 10 minutes after the change of fresh sample feed and the results are plotted in Figure 6. These and other data over a wider concentration range indicate that the response is linear over the tested carbon concentration range of 20-5,000 $mgl^{-1}$, but that better results are obtained when progressively increasing the concentration of ethanol in the sample than when decreasing it indicating a memory affect; this coupled with the fast rise time is an added advantage for pollution monitoring. Figure 7 shows that changes of ethanol concentration are closely reflected by instrument response. The time of response to changes in concentrations was approximately 2 minutes, which was the time required for pumping the fresh sample feed to the nebulizer intake point, and this can, of course, be shortened, in due course with improved design. The full response was reached in 10 minutes.

Determining the optimum fresh sample feed rate

While the relative response of the TOC monitor to various organic compounds has been greatly improved by the use of a sample-recycle system, if the monitor response is to have absolute significance, it is necessary to set the rate of fresh sample feed so that it exactly equals the rate of loss of sample to the splitter and detector. Since the nebulization efficiency is usually between 5-10%, the fresh sample feed rate should lie within the range of 0.15-0.3 ml $min^{-1}$, at a total sample uptake rate of 3 ml $min^{-1}$ by the pneumatic nebulizer under normal operating conditions. Nevertheless, it is difficult to estimate this with precision by measurements of the type described in above under the heading "operation of the recycle system of the invention".

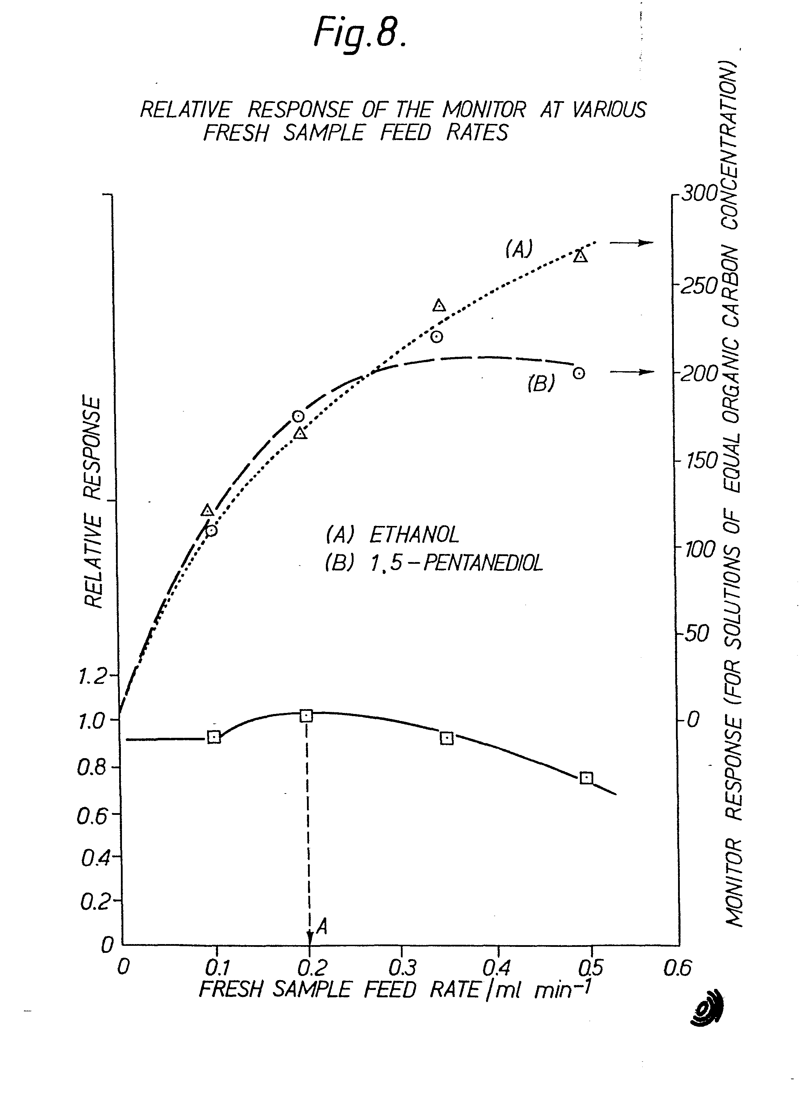

To achieve this optimisation practically, the steady (plateau) response of the instrument is measured as a function of fresh feed flow rate for a number of feed rates (as shown in Figure 8) for a

0021575

solution of a volatile organic compound such as ethanol solution and for a solution of a non-volatile organic compound (such as 1,5-pentanediol or benzoic acid). The response curves for solutions of equal organic carbon concentration are also shown in Figure 8. In both cases, if the feed rate is too low, the response is lower than it should be because the mixed solution fed to the nebulizer will be diluted with some distilled water from the water trap rather than with recycled drain liquid (this is because the instrument is started up with the trap filled with distilled water). As the feed rate is increased, the response will rise continuously in the case of a solution of a volatile organic solute, since the concentration of that compound in the feed to the nebulizer will continue to increase. In the case of a non-volatile solute, once the correct fresh feed rate has been achieved, the composition of fresh feed equals that in the recycled drain liquid and so the curve reaches a plateau. We have chosen to take the ratio of these two curves (as plotted on Figure 8) and to select the maximum point on this resultant curve as representing the correct feed rate to operate the recycle process. This is supported by the fact that the ratio of the responses for 1,5-pentanediol/ethanol is 1,02 at the point A, compared with the theoretical ratio of 1.07 (or 1.20) (see Table VIII).

Discussion and evaluation

The instrument described is simple, reliable and inexpensive and can be operated on a continuous basis on filtered sample e.g. from a fast loop sampler. It gives no response to inorganic carbonates and bicarbonates. The presence of alkali metal ions may cause interference to the monitor response. However, such interference can virtually be eliminated by the addition of sulphuric acid and by the use of nitrogen as the carrier gas. If an abnormally high inorganic salt content is present, sample pre-dilution is required and this can be done continuously and automatically by the use of autoanalyzer techniques. The sensitivity of the monitor (approximately 1 mgl$^{-1}$ of carbon) is such that such a dilution can normally be tolerated.

With the use of the recycle-system, the response of the instrument to various organic compounds is more closely in line with the predicted theoretical relative response, taking into account "carbon deficiency" corrections, for hetero atoms present, when using an FID detector than when using the instrument without recycle. So far it has not been
possible to obtain the theoretical response using aqueous solutions
of highly volatile solvents such as toluene, since in the instrument
described the pump used was a peristaltic pump with which loss of
solvent occurs in the PVC pump tubing. Thus low results will be
obtained even with a recycle system. With a suitable pump (such as an
HPLC solvent metering pump), however, it would be expected to approach
the theoretical response even for solvents such as toluene.

With the recycle-system of the invention, the instrument response
is still not a direct measure of the organic carbon content of the
effluent, independent of the type of organic compound in solution.
For a given dissolved carbon concentration, the instrument response
will be influenced by the "carbon deficiency" values listed in Table
III. There will, however, always be a general correlation between the
dissolved carbon content of the feed solution and the instrument
response.

For most monitoring applications, however, the absolute concentration values (say as TOC) are not required, provided reliable indication
of any significant changes in concentration are clearly and rapidly
given. The performance characteristics of the TOC instrument which
has been developed in accordance with the invention meets these requirements for a successful online, continuous monitor of dissolved
organic matter in water.

The potential applications of this instrument include:

(i) The optimisation of chemical plant operation Since the composition of a process effluent is often relatively
constant, the variations in the quality of plant effluent, and
hence the efficiency of the plant process, can be reflected by
the changes in monitor response, when this can be measured by
dissolved and colloidal TOC.

(ii) The detection of unacceptable levels of organic pollution An instrument response corresponding to the maximum acceptable
organic level of organic load of an effluent can be pre-set.
Whenever the observed response exceeds the pre-determined value,
an alarm can be triggered off, permitting appropriate action to
be taken to correct the situation (which may be due to plant
malfunction or to spillage).

(iii) When fully developed the instrument is expected to be able to measure TOC value down to about 1 $mgl^{-1}$ of carbon and so it may be ·used·for <u>monitoring potable water intakes</u> from rivers or for monitoring the discharge from industrial waste water treatment plants or from sewage works.  Such an instrument is of particular value for effluents which contain volatile organics as the major organic constituents, and in the presence of significant amounts of inorganic carbonates or bicarbonates and dissolved carbon dioxide.

1.    A method of producing an aerosol or a vapour by
nebulisation of a liquid in which method the liquid is
nebulised and any liquid passing through the nebuliser
without being nebulised is mixed with liquid being fed to
the nebuliser in such a way that the rate of liquid fed to
the nebuliser is in balance with the rate of actual nebulisation of the liquid.

2.    A method according to claim 1 in which at least
part of the aerosol or vapour subsequently passes to means
capable of detecting and optionally determining the concentration of a component of the liquid.

3.    A method according to claim 1 or 2 in which the
liquid is a solution or suspension.

4.    A method according to claim 2 in which the liquid
contains dissolved and/or colloidally dispersed carbon containing compounds.

5.    A method according to claim 4 in which the alcohol
or vapour passes to analytical means which comprises a flame
ionisation detector.

6.    A method according to any one of the preceding claims
in which the aerosol or vapour is diluted with a gas.

7.    A method according to claim 4 in which the liquid
comprises sulphate ions.

8.    A method according to claim 7 in which the sulphate
ions are provided by sulphuric acid or ammonium sulphate.

9.    A method according to claim 4 in which the nebulising
gas is an inert gas.

10.    Apparatus for the production of an aerosol or vapour
of a liquid, said apparatus comprising a nebuliser adapted
to be fed with the liquid to be nebulised and, associated
therewith, means for collecting liquid which has passed
through the nebuliser without being nebulised, mixing the
collected liquid with incoming liquid and passing the so-
formed mixture to the nebuliser.

11.    Apparatus according to claim 10 in which the nebuliser
and associated means are arranged so that liquid passing
through the nebuliser without being nebulised is mixed with fresh sample and recycled in such a way that the rate at which the sample is fed to the nebuliser is substantially equal to the actual rate of nebulisation.

12. Apparatus according to claim 10 or 11 comprising also means capable of detecting and optionally determining the concentration of a component of said liquid.

13. Apparatus according to any of the claims 10, 11, 12 or 13, comprising means capable of preventing condensation of a formed aerosol or vapour from condensing upon the walls of the apparatus.

14. Apparatus according to claim 10 in which the detecting means is a flame ionisation detector.

15. Apparatus according to any of claims 10 to 14 comprising means for diluting the formed aerosol or vapour with a gas.

16. Apparatus according to claim 10 and substantially as hereinbefore described.

17. A method according to claim 1 and substantially as hereinbefore described.

B J BATE
AGENT FOR THE APPLICANTS

Fig.1.

## Fig.2.

SPLITTER / DETECTOR

(NEBULISED SAMPLE)

F4

NEBULIZER

F2

RECYCLED DRAIN

FRESH FEED F1

PUMP

F3 (UNNEBULISED SAMPLE)

MIXING CHAMBER

$F_1 = F_4 = F_2 - F_3$

## Fig.3.

$C_2$

$R_1$

$R_2$

AMP

$C_1$

AMPLIFIER

RECORDER

Fig.4.

# Fig.5.

ATTENUATION / $2 \times 10^2$

ETHANOL

TRIMETHYL
HEXADECANYL
AMMONIUM
BROMIDE

RESPONSE

TIME / MIN

# Fig.6.

(A) DAY 1:INCREASING CONCENTRATION
(B) DAY 2:DEACREASING CONCENTRATION

# Fig.7.

# Fig.8.

RELATIVE RESPONSE OF THE MONITOR AT VARIOUS
FRESH SAMPLE FEED RATES

(A) ETHANOL
(B) 1,5 – PENTANEDIOL

## European Patent Office ·

# EUROPEAN SEARCH REPORT

Application number

EP 80 30 1514.8

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | DD - A - 81 391 (W. ULLMANN et al.) <br> * column 3, line 54; fig. 1 to 3 * <br> -- <br> DE - B2 - 1 652 369 (LICENTIA) <br> * column 2, line 42 to column 4, line 15; fig. * <br> -- | 1-3,6, <br> 9-11, <br> 15-17 <br> 1,2,10 <br> 11,16, <br> 17 | B 01 F   3/04 <br> B 05 B   1/28 <br> //G 01 N   1/00 |
| A | GB - A - 1 250 943 (J.U. WHITE) <br> * complete document * <br> -- | | |
| A | US - A - 3 580 680 (W.L. CRIDER) <br> * complete document * <br> -- | | B 01 F   3/04 <br> B 01 J   13/00 <br> B 05 B   1/28 <br> G 01 N   1/00 <br> G 01 N   21/72 |
| A | DD - A - 64 326 (G. PFORR) <br> * position 9 * <br> ----- | | |

**TECHNICAL FIELDS SEARCHED (Int.Cl.3)**

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 12-09-1980 | KÜHN |

EPO Form 1503.1   06.78